(19) Europäisches Patentamt

European Patent Office

Office européen des brevets

(11) EP 1 432 058 A2

(12) **EUROPEAN PATENT APPLICATION**

(43) Date of publication:
23.06.2004 Bulletin 2004/26

(21) Application number: 03026897.3

(22) Date of filing: 24.11.2003

(51) Int Cl.⁷: **H01M 4/90**, H01M 8/06,
H01M 8/12, B01J 23/00,
G01N 27/00

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.12.2002 EP 02028334**

(71) Applicant: **Max-Planck-Gesellschaft zur
Förderung der Wissenschaften e.V.
80539 München (DE)**

(72) Inventors:
• **Allmendinger, Frank, Dipl.-Phys.
70327 Stuttgart (DE)**
• **Merkle, Rotraut, Dr.
70563 Stuttgart (DE)**
• **Kreuer, Klaus-Dieter, Dr.
71034 Böblingen (DE)**
• **Maier, Joachim, Prof. Dr.
75446 Wiernsheim (DE)**

(74) Representative:
**Weiss, Wolfgang, Dipl.-Chem. Dr. et al
Weickmann & Weickmann
Patentanwälte
Postfach 86 08 20
81635 München (DE)**

(54) **Anode material with catalytic activity**

(57)    The present invention relates to an anode material having a catalytic activity, which may be used for the manufacture of electrochemical cells, particularly fuel cells comprising a reforming process.

**Description**

The present invention relates to an anode material having a catalytic activity, which may be used for the manufacture of electrochemical cells, particularly fuel cells for a reforming process.

Fuel cells are expected to provide an efficient and environmentally friendly form of power generation. As fuels, hydrogen, methane, methanol and higher alkanes or alcohols may be used. In most cases, the hydrogen enriched fuel gas is generated in a separate procedure (external reforming) from the original fuel gas and subsequently oxidised at the anode of a fuel cell under recovery of electrical current. For this process, a catalyst consisting of $Cu/ZnO/Al_2O_3$ is known, which has been optimised for the methanol synthesis (Hansen, Methanol Synthesis In: Handbook of Heterogeneous Catalysis, Wiley-VCH, 1997). At low temperatures, this catalyst is also active in a methanol reforming process. For example, at an operational temperature of 220 °C, the catalytic activity as well as the $CO_2$ selectivity is high. At higher temperatures, however, the $CO_2$ selectivity decreases accompanied with an increase of CO formation. This results in possible poisoning of the electrode by CO, the necessity of an external combustion of CO, and leads to a decreased degree of efficiency of the fuel cell.

In order to simplify the design of fuel cells and to increase the degree of efficiency, attempts have been made to carry out the reforming process directly at a catalytically active anode (internal reforming or direct reforming). For example, Hole and Bake (CA 2,186,786) disclose fuel cells composed of bifunctional catalyst anodes and proton conducting membranes for direct utilization of natural gas. At a bifunctional anode, methane is reacted to alkenes, alkines and hydrogen. Protons from that are transported to the cathode via a proton conducting oxide and reacted there with oxygen to water. Qingfeng et al., Electrochem. Solid-State Lett., 5 (2002), 125-128, propose a quasi-direct methanol fuel cell system based on blend polymer membrane electrolytes which are operative at low temperatures and an integrated reformer with a $Cu/ZnO/Al_2O_3$ catalyst. Iwahara et al. describe high-temperature $C_1$ gas fuel cells using proton conducting solid electrolytes, e.g. an oxidic proton conductor such as $BaCeO_3$ and platinum anodes and cathodes. Methanol is oxidised directly at 900 °C on the platinum anode.

The prior art, however, does not provide an anode material with catalytic activity for the internal reforming process, and which is particularly suited for operating together with an oxidic proton conductor, particularly in the temperature range of 300 - 800 °C.

When using pure zinc oxide catalyst instead of a $Cu/ZnO/Al_2O_3$ catalyst at temperatures higher than 300 °C for the methanol reforming process

$$CH_3OH + H_2O \rightarrow CO_2 + 3 H_2 ,$$

a considerable higher catalytic activity can unexpectedly be found compared to the $Cu/ZnO/Al_2O_3$ catalyst. In this temperature range, pure zinc oxide additionally has a considerable higher $CO_2$ selectivity than the $Cu/ZnO/Al_2O_3$ catalyst: at 350 °C, the selectivity with regard to $CO_2$ for pure zinc oxide is 94% whereas for the methanol synthesis catalyst of BASF 82% were measured, at higher temperatures, the $CO_2$ selectivity of the BASF catalyst decreases unexpectedly more strongly than said of pure zinc oxide.

Therefore, the invention provides an anode material, which catalyses the internal reforming of combustible gases, particularly methanol and higher alcohols, and which is especially suitable for the operation in an electrochemical cell (fuel cell, sensor) in combination with an oxidic proton conductor as an electrolyte in the temperature range between 300 - 800 °C, since with these elevated temperatures, the $CO_2$ selectivity remains high. It also fulfils a further requirement which must be met by a catalytically active electrode ( i.e. a bifunctional material): under reducing operating conditions at the anode, the electronic conductivity is sufficiently high, e.g. for zinc oxide at 300 °C: 0.23 S/cm, 500 °C: 0.21 S/cm, 650 °C: 0.15 S/cm).

The presence of both features (which, apart from ZnO, are also expected for other transition metal oxides) allow the operation of catalysts based predominantly on metal oxides as a sole anode material. On the one hand, the high electronic conductivity provides the transport of the electrons through the anode into the external circuit and on the other hand, due to the catalytic activity, hydrogen is obtained from methanol via the reforming process with water, which is used directly or after temporary desorption into the gas phase for the operation of the fuel cell.

These features can be further improved by a donor doping: thus, the electronic conductivity can be increased and the catalytic activity for the methanol steam reforming process can further be augmented.

The catalytic activity of the pure metal oxide, e.g. ZnO is high enough in order to provide sufficient hydrogen for technically interesting current densities (at 400 °C, and a specific surface of the anode of 12 $m^2$/g and a typical coverage of the electrolyte by the electrode material of 0.1 $g/cm^2$, a maximum current density of approx. 95 $mA/cm^2$ is obtained).

Thus, a subject matter of the present invention is an electrochemical cell comprising:

   (a) an anode comprising a material having a catalytic activity which substantially consists of at least one metal oxide,
   (b) a proton conducting electrolyte, and
   (c) a cathode.

The cell is preferably a fuel cell in which an internal reforming process takes place. The fuel is preferably an alcohol, e.g. methanol or a higher alcohol such as ethanol, propanol, isopropanol or mixtures thereof. On the other hand, the cell may be used as a sensor, particularly for above mentioned fuels.

The anode with catalytic activity substantially consists of a metal oxide or a mixture of metal oxides and its catalytic activity is determined mainly by the oxidic components. Preferably, the catalytically active anode material has a content of at least 80% (w/w) of metal oxide, more preferably of at least 90% (w/w), most preferably of at least 99% (w/w). The metal oxide preferably comprises a transition metal oxide, an oxidic transition metal compound or a mixture or a composite thereof, wherein the transition metal oxide may be selected from zinc oxide, cer oxide, stannic oxide, titan oxide, zirconium oxide, tungsten oxide, molybdenum oxide, vanadium oxide, niobium oxide, tantal oxide, chromium oxide, manganese oxide or mixtures of two or more oxides thereof.

More preferably, the transition metal oxide is zinc oxide. The transition metal oxide, e.g. the zinc oxide may be optionally doped e.g. with donor dopants such as Al, Ga in amounts of from 0 to several % (w/w), e.g. up to 10% (w/w), preferably up to 5% (w/w).

The electrochemical cells further comprise a proton conducting electrolyte, e.g. a proton conducting oxide. Preferred proton conducting materials are acceptor doped perovskites, which take up water and by this allow proton conductivity. Particularly preferred are Y- and/or Ce-doped barium or strontium zirconates.

Preferably, the metal oxide of the anode is chosen such that it does not have a significant reactivity with the electrolyte material at the operation temperature of the electrochemical cell. Thus, the formation of undesired heterologous phases on the boundary phase between anode and electrolyte may be avoided.

The cathode (c) of the electrochemical cell may be a suitable material, e.g. a noble metal such as platinum or oxidic materials which have a catalytic activity for the reduction of oxygen.

The electrochemical cell is preferably assembled such that the anode material is applied to one side of the surface of the solid phase electrolyte and the cathode material is contact with another side of the solid electrolyte, particularly the opposing surface.

Alternatively, a thin but gastight film of the electrolyte material can by applied on a self-supporting slab of the anode material, and then covered by the cathode material.

The invention also relates to the use of the anode material as permeation membranes. Those permeation membranes (with inner or outer electronic short circuit) will permeate hydrogen from the hydrogen-rich fuel gas, e.g. an alcohol such as methanol, to the hydrogen-poor side.

Further, the present invention is explained in more detail by the following examples:

Example 1: Catalytic activity and selectivity of ZnO catalysts

The catalytic activity and selectivity of a ZnO catalyst according to the invention was determined in a methanol reforming reaction compared to a $Cu/ZnO/Al_2O_3$ catalyst of the prior art. The metal contents in the non activated (not reduced) catalyst were: Cu: 24.8 w/w, Zn: 24.8 w/w and Al: 9.4 w/w. The total pressure of the reaction was 1 bar and the determination was carried out by mass spectroscopy.

The catalytic activity was determined via the turn over frequency (TOF) for hydrogen, which is formed from methanol at the catalyst.

| Turn over frequency / mmol $m^{-2}$ $min^{-1}$ | | | |
|---|---|---|---|
| Temperature | 350°C | 375°C | 400°C |
| $Cu/ZnO/Al_2O_3$ | 4.63e-3 | 4.75e-3 | 4.85e-3 |
| ZnO | 5.18e-3 | 0.0195 | 0.0451 |

The $CO_2$ selectivity was determined from the product distribution of CO and $CO_2$ on the basis of reacted methanol.

| $CO_2$ selectivity / % | | | |
|---|---|---|---|
| Temperature | 350°C | 375°C | 400°C |
| $Cu/ZnO/Al_2O_3$ | 82.2 | 78.4 | 76.3 |
| ZnO | 94.4 | 94.1 | 94.0 |

1.Example 2: Use of a ZnO catalyst as anode material for an internal methanol reforming reaction in a fuel cell.

An electrochemical gas concentration cell having ZnO as an anode, a Y-and Ce-doped barium zirconate as an electrolyte, and platinum as a cathode was used as a fuel cell for an internal methanol reforming reaction. Zinc oxide was applied as a suspension in isopropanol on the dense sintered ceramic electrolyte (thickness 1.5 mm). Then, the sample was tempered at 950 °C in order to bind the zinc oxide to the electrolyte. On the cathode side, a porous platinum electrode was placed.

Measurements were carried out at 600 °C with a methanol-water-mixture, which was kept at 20 °C and had a methanol partial pressure of about 15 hPa and a water partial pressure of 23 hPa. On the cathode side, moisturised pure oxygen was used. An open cell voltage of 0.8 V was determined, the short-circuit current of the cell was 1 mA/$cm^2$. It must be emphasized that a thinner electrolyte layer will enhance the current density.

Example 3: Analysis of the additional phase formation between the ZnO catalyst and the solid phase electrolyte.

In order to determine possible reactions between ZnO and Y-and Ce-doped barium zirconate, ZnO powder and Y- and Ce-doped barium zirconate powder was thoroughly mixed in a volume ratio of 1:1 and kept for 100 h at 900 °C. A subsequent X-ray diffractometric analysis did not show any reflections originating from a possible additional phase. This demonstrates the long-term stability of a fuel cell according to the present invention.

**Claims**

1. Electrochemical cell comprising:

   (a) an anode comprising a material having a catalytic activity which substantially consists of at least one metal oxide,
   (b) a proton conducting electrolyte, and
   (c) a cathode.

2. The cell of claim 1, which is a fuel cell.

3. The cell of claim 2 for the use in a reforming process.

4. The use of claim 3 which comprises an internal reforming process.

5. The cell of any one of claims 2 - 4 wherein the fuel is an alcohol.

6. The cell of claim 5 wherein the alcohol is methanol.

7. The cell of claim 1 - 6, which is used as sensor.

8. The cell of any one of claims 1 - 7 wherein the metal oxide comprises doped or undoped transition metal oxides, doped or undoped transition metal oxide compounds, or a mixture or composite thereof.

9. The cell of claim 8 wherein the transition metal oxide is selected from zinc oxide, cer oxide, stannic oxide, titan oxide, zirconium oxide or mixtures of two or more oxides thereof.

10. The cell of claim 8 wherein the transition metal oxide is selected from tungsten oxide, molybdenum oxide, vanadium oxide, niobium oxide, tantal oxide, chromium oxide, manganese oxide or mixtures of two or more oxides thereof.

11. The cell of claim 9 wherein the transition metal oxide is zinc oxide doped with donor dopants, e.g. Al, Ga.

12. The cell of any one of claims 1 - 11 wherein the proton conducting electrolyte is a proton conducting oxide.

13. The cell of claim 12 wherein the proton conducting electrolyte is a barium or strontium zirconate preferably doped with Y and/or Ce.

14. The cell of any one of claims 1 - 13 wherein the cathode comprises platinum.

15. The cell of any one of claims 1 - 14 having an operational temperature of from 300 - 800 °C.

16. A reforming process which is carried out in an electrochemical cell according to any one of claims 1 - 15.

17. Use of an anode material as defined in any one of claims 1, 3-6 or 8-11 for the manufacture or coating of permeation membranes.